# EUROPÄISCHE PATENTSCHRIFT

(11) **EP 3 085 049 B1**
(45) Veröffentlichungstag und Bekanntmachung des Hinweises auf die Patenterteilung: **21.08.2019**
(21) Anmeldenummer: 14818878.2
(22) Anmeldetag: 17.12.2014
(51) Int. Cl.: H04W 12/00, H04W 48/04, H04W 4/02, H04W 4/00, H04W 64/00, H04L 29/06, H04L 29/08, H04W 8/26, H04W 60/00, H04W 8/18, H04M 15/00, H04W 4/70

(54) **VERFAHREN UND VORRICHTUNGEN ZUM AKTIVIEREN EINER SUBSKRIPTION FÜR DIE KOMMUNIKATION ÜBER EIN MOBILFUNKNETZ**
METHOD AND APPARATUSES FOR ACTIVATING A SUBSCRIPTION FOR COMMUNICATION IN A MOBILE RADIO NETWORK
PROCEDE ET APPAREIL D'ACTIVATION D'UN ABONNEMENT POUR COMMUNICATION SUR UN RÉSEAU SANS FIL

(30) Priorität: 20.12.2013 DE 102013021967
(43) Veröffentlichungstag der Anmeldung: 26.10.2016
(73) Patentinhaber: Giesecke+Devrient Mobile Security GmbH, 81677 München (DE)
(72) Erfinder: GERSTENBERGER, Volker, 85435 Erding (DE); MORAWIETZ, Andreas, 81377 München (DE); NITSCH, Nils, 85570 Markt Schwaben (DE); SCHNEIDER, Olaf, 81829 München (DE); WEBER, Tom, 86807 Buchloe (DE)
(86) Internationale Anmeldenummer: PCT/EP2014/003404
(87) Internationale Veröffentlichungsnummer: WO 2015/090585

(56) Entgegenhaltungen:
- EP-A2- 1 337 120
- EP-A2- 1 768 316
- US-A1- 2012 009 979
- US-A1- 2012 184 274
- US-A1- 2013 165 073
- "White Paper - Dynamic SIM Allocation(TM)", , 9. März 2012 (2012-03-09), Seiten 1-33, XP055172610, Englewood, CO 80112 Gefunden im Internet: URL:http://www.gsma.com/membership/wp-cont ent/uploads/2012/03/Dynamic_SIM_Allocation _Solution_Overview_WP.pdf [gefunden am 2015-02-27]

## Beschreibung

### Gebiet der Erfindung

Die Erfindung betrifft die Kommunikation über Mobilfunknetze im Allgemeinen und insbesondere Verfahren und Vorrichtungen zum Verwenden und insbesondere zum Aktivieren einer Subskription auf einem Sicherheitselement, wie beispielsweise einer SIM, einer eUICC/UICC oder dergleichen. Dabei ist das Sicherheitselement Teil eines mobilen Endgeräts, das dazu ausgestaltet ist, über ein Mobilfunknetz zu kommunizieren.

### Hintergrund der Erfindung

Das Kommunizieren mittels eines mobilen Endgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das mobile Endgerät mit einem Sicherheitselement zum sicheren Speichern von Daten ausgestattet ist, die den Benutzer des mobilen Endgeräts gegenüber dem Mobilfunknetzwerk eindeutig identifizieren. Beispielsweise kommt bei einem mobilen Endgerät, das dazu ausgestaltet ist, gemäß dem GSM-Standard (Global System for Mobile Communications) zu kommunizieren, bei dem es sich zur Zeit um den auf der Welt am weitesten verbreiteten Mobilfunkstandard handelt, ein Sicherheitselement mit dem Namen SIM (Subscriber Identity Module) üblicherweise in Form einer Chipkarte bzw. Smartcard zum Einsatz. Gemäß dem GSM-Standard, dessen technische Merkmale in einer Vielzahl von miteinander verknüpften und voneinander abhängigen Spezifikationen definiert werden, enthält die SIM-Karte Teilnehmeridentifikationsdaten bzw. Subskriptionsberechtigungsdaten ("Subscription Credentials"), die Teil einer Subskription (auch Subskriptionsprofil genannt) sind, zum Identifizieren und Authentisieren des Benutzers bzw. Teilnehmers, einschließlich einer IMSI (International Mobile Subscriber Identity) und eines Authentisierungsschlüssels Kᵢ.

Ein Anwendungsgebiet von Sicherheitselementen, wie SIM-Karten, UICCs, eUICCS und dergleichen, das aller Voraussicht nach in den kommenden Jahren beträchtlich wachsen wird, ist die M2M-Kommunikation ("machine-tomachine communication"), d.h. die Kommunikation zwischen Maschinen über ein Mobilfunknetz ohne menschliche Interaktion, wofür auch die Bezeichnung "Internet of Things" verwendet wird. Bei der M2M-Kommunikation können Daten automatisch zwischen zahlreichen unterschiedlichen Arten von Maschinen ausgetauscht werden, die mit einem Sicherheitselement in Form oder als Teil eines M2M-Moduls ausgestattet sind, beispielsweise TV-Systeme, Set-Top-Boxen, Verkaufsautomaten, Fahrzeuge, Verkehrsampeln, Überwachungskameras, Sensorvorrichtungen, Stromzähler und ähnliche M2M-Vorrichtungen, wobei in der Regel das M2M-Modul bzw. das Sicherheitselement fest in einer jeweiligen M2M-Vorrichtung verbaut ist. Auch bei einem Sicherheitselement, das Teil eines M2M-Moduls oder als ein solches ausgestaltet ist, muss in der Regel eine Subskription mit Subskriptionsberechtigungsdaten auf dem Sicherheitselement vorhanden sein, damit sich dieses gegenüber einem Mobilfunknetz identifizieren und authentifizieren kann und somit über das Mobilfunknetz kommunizieren kann.

Bei der Herstellung eines Sicherheitselements für ein mobiles Endgerät oder eine M2M-Vorrichtung werden üblicherweise die Subskriptionsberechtigungsdaten vom Hersteller des Sicherheitselements oder dem Netzbetreiber im Rahmen eines Personalisierungsprozesses als Teil einer Subskription auf dem Sicherheitselement hinterlegt. Bei dieser Vorgehensweise ist die entsprechende Subskription in der Regel sofort "aktiv", d.h. kann zur Kommunikation über ein Mobilfunknetz verwendet werden, sofern die Subskriptionsberechtigungsdaten, beispielsweise eine IMSI, auch in dem entsprechenden Mobilfunknetz hinterlegt sind. Wird eine M2M-Vorrichtung mit einer solchen aktiven Subskription an einen Kunden geliefert, so kann das Problem auftreten, dass, falls die M2M-Vorrichtung auf dem Weg zum Kunden entwendet wird, abhandenkommt oder auf andere Art und Weise verloren geht, die aktive Subskription der M2M-Vorrichtung nichtsdestotrotz die Kommunikation über ein Mobilfunknetz ermöglicht, was in der Regel nicht im Interesse des Kunden und/oder des Herstellers des M2M-Vorrichtung liegen kann.

Aus der Europäischen Patentanmeldung EP 1337 120 A2 ist ein Verfahren zur zentralseitig gesteuerten Aktivierung und Deaktivierung einer in einem mobilen Endgerät befindlichen Netz-Identifikations-Karte bekannt, worin die betreffenden Aktionen durch die lokale Auswertung von z.B. Timern oder der Anwesenheit in einem Geofence ausgelöst werden.

Ferner geht aus dem Dokument "White Paper - Dynamic SIM Allocation™" vom 9. März 2012 ein Verfahren hervor, mit dem einer SIM-Karte bei der ersten Verwendung eine bestimmte Vorwahl zugeordnet werden kann.

Vor diesem Hintergrund stellt sich der vorliegenden Erfindung die Aufgabe, verbesserte Verfahren und Vorrichtungen zum Verwenden einer Subskription auf einem Sicherheitselement vorzuschlagen, mit denen der vorstehend beschriebene Nachteil zumindest teilweise behoben werden kann.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß einem ersten Aspekt der Erfindung wird ein Verfahren zum Aktivieren einer Subskription auf einem Sicherheitselement bereitgestellt, das in einem mobilen Endgerät eingesetzt oder darin fest verbaut Teil dieses Endgeräts ist. Dabei umfasst das Verfahren die folgenden Schritte: das Empfangen einer Anfrage des Sicherheitselements durch ein Mobilfunksystem, über ein Mobilfunknetz des Mobilfunksystems zu kommunizieren; das Ermitteln der Position des mobilen Endgeräts; und das Überprüfen durch das Mobilfunksystem, ob die ermittelte Position des mobilen Endgeräts in einen vordefinierten Bereich von erlaubten Positionen fällt, wobei die Subskription auf dem Sicherheitselement aktiviert und dadurch dem Sicherheitselement die Kommunikation über das Mobilfunknetz ermöglicht wird, falls die ermittelte Position des mobilen Endgeräts in den vordefinierten Bereich von erlaubten Positionen fällt.

Vorzugsweise meldet sich vor dem Schritt des Empfangens der Anfrage das Sicherheitselement mit der zu aktivierenden Subskription bei dem Mobilfunknetz oder einem Hintergrundsystem des Mobilfunksystems an.

Gemäß bevorzugter Ausführungsformen der Erfindung meldet sich vor dem Schritt des Empfangens einer Anfrage das Sicherheitselement mit einer vorläufigen Subskription bei dem Mobilfunksystem an und nach dem Schritt des Überprüfens wird die zu aktivierende Subskription vom Hintergrundsystem auf das Sicherheitselement heruntergeladen.

Vorzugsweise umfasst das Verfahren nach dem Schritt des Überprüfens den folgenden weiteren Schritt: falls die ermittelte Position des mobilen Endgeräts in den vordefinierten Bereich von erlaubten Positionen fällt, das Ändern von Einstellungen im Mobilfunksystem derart, dass bei weiteren Anmeldungsvorgängen des Sicherheitselements mit der freigeschalteten Subskription bei dem Mobilfunksystem keine weitere Überprüfung der Position des mobilen Endgeräts erfolgt.

Gemäß bevorzugter Ausführungsformen der Erfindung wird die Subskription auf dem Sicherheitselement nicht freigeschaltet, falls die ermittelte Position des mobilen Endgeräts nicht in den vordefinierten Bereich von erlaubten Positionen fällt. Vorzugsweise wird die Position des mobilen Endgeräts mittels Daten von einem globalen Navigationssatellitensystem, z.B. GPS-Daten, ermittelt. Alternativ oder zusätzlich wird die Position des mobilen Endgeräts ermittelt, indem die Mobilfunkzelle bestimmt wird, in der sich das mobile Endgerät befindet.

Vorzugsweise wird der Schritt des Überprüfens, ob die ermittelte Position des mobilen Endgeräts in einen vordefinierten Bereich von erlaubten Positionen fällt, durch das Mobilfunknetz oder das Hintergrundsystem durchgeführt. Dabei ist der Bereich von erlaubten Positionen vorzugsweise durch Daten vordefiniert, die auf dem Hintergrundsystem hinterlegt sind.

Gemäß einem zweiten Aspekt der Erfindung wird ein mobiles Endgerät mit einem Sicherheitselement bereitgestellt, das eingesetzt oder darin fest verbaut Teil dieses mobilen Endgeräts ist und dazu ausgestaltet ist, nach einem Verfahren gemäß dem ersten Aspekt der Erfindung mit einer aktivierten Subskription versehen zu werden, um über das Mobilfunknetz kommunizieren zu können.

Bei einem erfindungsgemäßen Sicherheitselement handelt es sich beispielsweise um einen in Hardware ausgestalteten Datenträger. Das Sicherheitselement ist beispielsweise als ein fest integrierter Bestandteil in einem mobilen Endgerät angeordnet, wobei es entweder in der Form nicht vom Endgerät entnommen werden kann, beispielsweise als Teilnehmeridentifikationsmodul, M2M-Modul, Co-Prozessor, Trusted Base, Trusted Platform Module. Alternativ ist das Sicherheitselement als ein entnehmbares Modul mit dem mobilen Endgerät verbunden, beispielsweise als Chipkarte, insbesondere als Teilnehmeridentifikationsmodul, Smart Card, Massenspeicherkarte, USB-Token, Multimediakarte, Secure MicroSD-Karte, Mobilfunknetztoken, z.B. ein UMTS-Surfstick und/oder als elektronisches Identitätsdokument, beispielsweise als elektronischer Personalausweis beziehungsweise Reisepass mit in einem Speicherbereich abgelegten maschinenlesbaren Identifikationsdaten einer Person.

Gemäß einer weiteren Alternative kann das Sicherheitselement als eine Kombination aus Hard- und Softwarekomponenten in einem vertrauenswürdigen Teil eines Betriebssystems des Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets® ausgebildet sein.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Aktivieren einer Subskription, als auch im Rahmen des zweiten Aspekts der Erfindung, d.h. im Rahmen eines Sicherheitselements mit einer gemäß dem ersten Aspekt der Erfindung aktivierten Subskription, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines Kommunikationssystems mit einem mobilen Endgerät mit einem Sicherheitselement und einem Mobilfunksystem, die unterschiedliche Aspekte der vorliegenden Erfindung illustriert,
- Fig. 2: eine schematische Darstellung eines erfindungsgemäß bevorzugten Ablaufs beim Verwenden und Aktivieren einer Subskription auf dem Sicherheitselement des mobilen Endgeräts von Figur 1 und
- Fig. 3: eine beispielhafte schematische Illustration eines Bereichs von für die Aktivierung erlaubten Positionen sowie eines Bereichs von für die Aktivierung nicht erlaubten Positionen des mobilen Endgeräts von Figur 1.

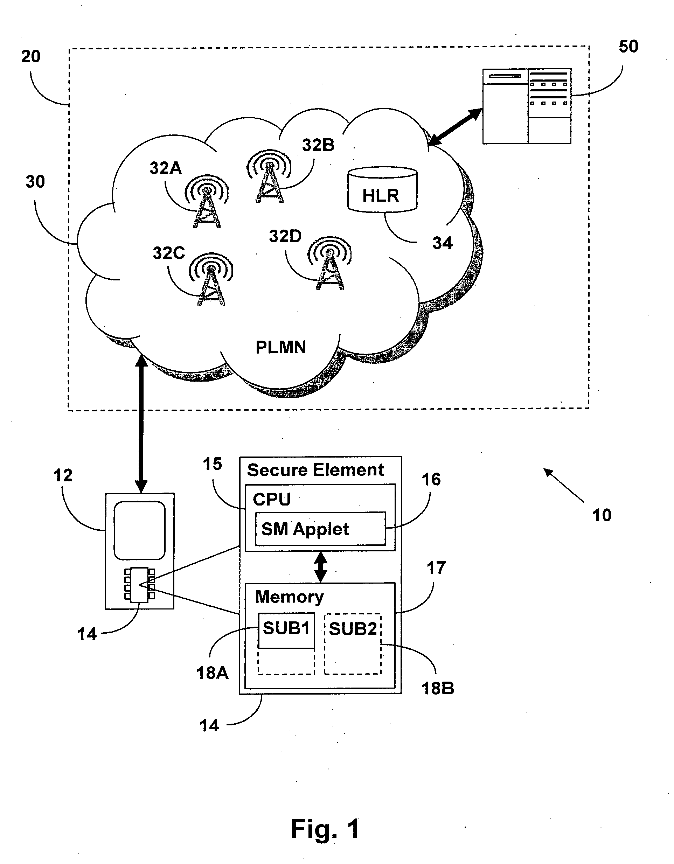

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert. Obgleich in der nachstehenden detaillierten Beschreibung auf ein "mobiles" Endgerät Bezug genommen wird, wird der Fachmann erkennen, dass die vorliegende Erfindung vorteilhaft im Zusammenhang mit jeder Art von Endgerät implementiert werden kann, das dazu ausgestaltet ist, über ein mobiles oder zelluläres Kommunikationsnetzwerk zu kommunizieren, also auch mit Endgeräten, deren Standort sich praktisch nicht ändert. Mit anderen Worten: das hierein verwendete Attribut "mobil" bezieht sich auf die Fähigkeit des Endgeräts über ein mobiles oder zelluläres Kommunikationsnetzwerk zu kommunizieren, einschließlich IP-basierte Kommunikationsnetzwerke, wofür nachstehend allgemein der Begriff "Mobilfunknetzwerk" bzw. "Mobilfunknetz" verwendet wird.

Ein beispielhaftes mobiles Endgerät 12 ist in Figur 1 dargestellt, das ein Sicherheitselement ("Secure Element") 14 zum sicheren Speichern und Verarbeiten von Daten umfasst, die beispielsweise das mobile Endgerät 12 und/oder dessen Benutzer eindeutig identifizieren. Wie dies in Figur 1 angedeutet ist, handelt es sich bei dem mobilen Endgerät 12 vorzugsweise um ein Mobiltelefon, ein Smartphone oder eine ähnliche Vorrichtung. Der Fachmann wird jedoch erkennen, dass das mobile Endgerät 12 gemäß der vorliegenden Erfindung ebenfalls in Form von anderen Vorrichtungen ausgestaltet sein kann, die dazu eingerichtet sind, über ein Mobilfunknetzwerk zu kommunizieren, wie beispielsweise ein Tablett-Computer, ein Notebook, ein TV-System, eine Set-Top-Box, ein Verkaufsautomat, ein PKW, eine Überwachungskamera, eine Sensorvorrichtung und vergleichbare M2M-Vorrichtungen.

Gemäß bevorzugter Ausführungsformen der Erfindung ist das Sicherheitselement 14 als eine eUICC (embedded Universal Integrated Circuit Card) mit einer darauf laufenden SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers und für die Bereitstellung unterschiedlicher Funktionen und Mehrwertdienste verwendet wird. Alternativ kann das Sicherheitselement 14 als eine UICC (Universal Integrated Circuit Card) oder SIM-Karte (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen, die je nach Generation und Typ des zugrunde liegenden Mobilfunkkommunikationssystemstandards als USIM, R-UIM, ISIM und dergleichen bezeichnet werden, ebenfalls von der vorliegenden Erfindung umfasst werden. Ferner kann es sich bei dem Sicherheitselement 14 um ein M2M-Modul handeln bzw. kann das Sicherheitselement 14 Teil eines solchen M2M-Moduls sein.

Gemäß weiterer bevorzugter Ausführungsformen der Erfindung kann das Sicherheitselement 14 als eine Kombination aus Hard- und Softwarekomponenten in einem vertrauenswürdigen Teil eines Betriebssystems einer zentralen Prozessoreinheit des mobilen Endgeräts 12 ausgebildet sein, die dem Fachmann auch als gesicherte Laufzeitumgebung ("Trusted Execution Environment"; TEE) bekannt ist. Das Sicherheitselement 14 kann dann beispielsweise innerhalb einer solchen gesicherten Laufzeitumgebung des mobilen Endgeräts 12 in Form von darin ablaufenden Programmen, sogenannten Trustlets® ausgebildet sein.

Das mobile Endgerät 12 ist dazu ausgestaltet, über die Luftschnittstelle mit einem Mobilfunksystem 20 zu kommunizieren, das wenigstens ein Mobilfunknetzwerk 30 (auch als "Public Land Mobile Network" [PLMN] bezeichnet) und ein Hintergrundsystem 50, vorzugsweise in Form eines geeignet ausgebildeten Servers, umfasst. Üblicherweise wird das PLMN 30 von einem Mobilfunknetzbetreiber (auch als "Mobile Network Operator" oder MNO bezeichnet) betrieben. Gemäß bevorzugter Ausführungsformen der Erfindung wird das PLMN 30 gemäß dem GSM-Standard ("Global Standard for Mobile Communications") betrieben.

Nachstehend werden bevorzugte Ausführungsformen der Erfindung im Zusammenhang mit einem Mobilfunknetzwerk als Teil des Mobilfunksystems 20 gemäß dem GSM-Standard beschrieben, der in einer Vielzahl von ETSI-Spezifikationen spezifiziert ist. Der Fachmann wird jedoch erkennen, dass die vorliegende Erfindung auch im Zusammenhang mit anderen Mobilfunknetzen vorteilhaft eingesetzt werden kann. Derartige Netze umfassen Mobilfunknetze der dritten Generation (3GPP), wie UMTS (Universal Mobile Telecommunications System), Mobilfunknetze der vierten Generation (4G), wie LTE (Long Term Evolution), sowie andere Mobilfunknetze, wie CDMA und dergleichen.

Wie dies dem Fachmann bekannt ist, umfasst ein gemäß dem GSM-Standard aufgebautes Mobilfunknetz bzw. PLMN im Allgemeinen ein BSS ("Base Station Subsystem"), das aus einer Vielzahl von BTS ("Base Transceiver Station") besteht, die jeweilige Funkzellen des PLMN definieren und mit einem BSC ("Base Station Controller") verbunden sind. Üblicherweise handelt es sich bei dem BSC um einen einer Vielzahl von BSC, die mit einem gemeinsamen MSC ("Mobile Switching Center") kommunizieren. Häufig ist eine lokale Datenbank, die VLR ("Visitor Location Register") genannt wird, Teil des MSC, um Informationen über die Mobilfunkteilnehmer vorzuhalten, die sich momentan in den Funkzellen befinden, die von einem MSC versorgt werden (d.h. der von einem MSC abgedeckte Bereich). Das MSC stellt im Wesentlichen dieselbe Funktionalität wie eine Vermittlungsstelle im Festnetz (publicswitched telephone network; PSTN) bereit und steht in Kommunikation mit einem HLR ("Home Location Register"), bei dem es sich um die primäre Datenbank des PLMN handelt, in der Informationen zur Anmeldung bzw. Authentisierung der Mobilfunkteilnehmer gespeichert sind. Hierzu hat das HLR üblicherweise Zugriff auf ein AUC ("Authentication Center"). Wie dies dem Fachmann bekannt ist, können die Kommunikationsverbindungen zwischen den vorstehend beschriebenen Komponenten eines PLMNs auf proprietären und/oder offenen Standards basieren. Die verwendeten Protokolle können beispielsweise SS7- oder IP-basiert sein. Wie die Netzwerckomponenten als separate oder zusammengefasste Einheiten ausgebildet sind und wie die Schnittstellen zwischen diesen Komponenten ausgebildet sind, ist Sache des MNO, so dass die vorstehende Beschreibung lediglich als beispielhaft zu verstehen ist.

Der Fachmann wird erkennen, dass, obgleich die vorstehend beschriebenen Funktionseinheiten eines herkömmlichen Mobilfunknetzes gemäß dem GSM-Standard in anderen oder zukünftigen Mobilfunkstandards andere Namen aufweisen können, die zugrundeliegenden Prinzipien im Wesentlichen gleich sind und diese daher von der Erfindung ebenfalls umfasst werden.

Der Übersichtlichkeit halber sind von den vorstehend beschriebenen Komponenten eines PLMN lediglich die folgenden in der schematischen Darstellung von Figur 1 gezeigt: vier beispielhafte BTS, nämlich die BTS 32A-D, die jeweils eine Funkzelle des PLMN 30 definieren, sowie ein HLR 34 für das PLMN 30. Wie sich dies Figur 1 entnehmen lässt, steht das PLMN 30 zumindest zeitweise in Kommunikation mit dem Hintergrundsystem 50, vorzugsweise in Form eines geeignet ausgestalteten Servers, wie dies nachstehend im Detail beschrieben wird. Das PLMN 30 könnte neben weiteren dem Fachmann bekannten Funktionseinheiten beispielsweise ein SMS-C ("Short Message Service Center") zum Speichern, Weiterleiten, Konvertieren und Zustellen von SMS-Nachrichten aufweisen, mittels derer beispielsweise Daten vom Hintergrundsystem 50 an das Sicherheitselement 14 des mobilen Endgeräts 12 übertragen werden können.

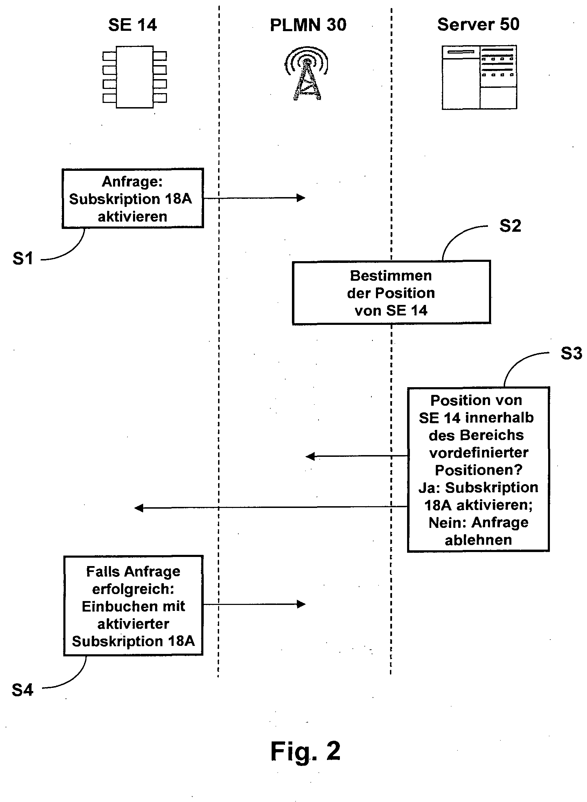

Wie sich dies der vergrößerten Ansicht des Sicherheitselements 14 in Figur 1 entnehmen lässt, umfasst das Sicherheitselement 14 vorzugsweise eine zentrale Verarbeitungseinheit bzw. einen zentralen Prozessor ("central processing unit"; CPU) 15. Vorzugsweise ist der Prozessor 15 derart ausgestattet, dass Applikationen auf dem Prozessor 15 ausgeführt werden können, wie beispielsweise eine Subskriptionsverwaltungsapplikation ("subscription management applet"; SM Applet), die vorzugsweise zumindest einige der Features zum Verwalten und Aktvieren von Subskriptionen auf dem Sicherheitselement 14 bereitstellt, wie dies nachstehend im Zusammenhang mit der Figur 2 detailliert beschrieben wird. Vorzugsweise ist die Subskriptionsverwaltungsapplikation 16 in Form eines Java Applets implementiert. Zur Bereitstellung einer entsprechenden Ausführungsumgebung für das SM Applet 16 kann vorzugsweise ein sicheres Betriebssystem (nicht in Figur 1 gezeigt) auf dem Prozessor 15 implementiert sein.

Das Sicherheitselement 14 umfasst vorzugsweise ferner eine Speichereinheit 17, die vorzugsweise als eine nicht-flüchtige, wiederbeschreibbare Speichereinheit, z.B. in Form eines Flash-Speichers, implementiert ist. Wie sich dies Figur 1 entnehmen lässt, ist eine Subskription 18A in der Speichereinheit 17 des Sicherheitselements 14 gespeichert. Vorzugsweise enthält die Subskription 18A Daten, die es dem Sicherheitselement 14 und dem mobilen Endgerät 12 ermöglichen, sich in das PLMN 30 einzubuchen, d.h. Daten, wie Subskriptionsberechtigungsdaten ("Subscription Credentials"), einen MNOspezifischen Authentisierungsalgorithmus und dergleichen. Vorzugsweise sind zumindest Teile der Speichereinheit 17 des Sicherheitselements 14 dazu ausgestaltet, sicher die Daten darin zu speichern, beispielsweise sensitive Subskriptionsberechtigungsdaten, wie eine IMSI ("International Mobile Subscriber Identity") oder ein Authentisierungsschlüssel Kᵢ, die Teil der Subskription 18A sind.

Wie dies in Figur 1 angedeutet ist, kann die Speichereinheit 17 vorzugsweise wenigstens einen weiteren "Slot" zum Unterbringen zusätzlicher Subskriptionen bereitstellen, wie beispielsweise zum Unterbringen der in Figur 1 dargestellten weiteren Subskription 18B.

Vorzugsweise wird die Subskription 18A in der Speichereinheit 17 des Sicherheitselements 14 im Rahmen der Herstellung und/oder der Personalisierung des mobilen Endgeräts 12 und/oder des Sicherheitselements 14 gespeichert. Insbesondere im Zusammenhang mit dieser bevorzugten Ausführungsform kann bei erfindungsgemäßen Varianten vorgesehen sein, dass es sich bei der Subskription 18A lediglich um eine vorläufiges Subskription ("provisional subscription") handelt, das nur Basisdienste bereitstellt, die es dem Sicherheitselement 14 und dem mobilen Endgerät 12 ermöglichen, mit dem Hintergrundsystem 50 über das PLMN 30 zu kommunizieren und eine vollständige Subskription ("complete subscription") vom Hintergrundsystem 50 herunterzuladen, die zusätzliche Dienste bereitstellt, wie beispielsweise die in Figur 1 dargestellte Subskription 18B. Da eine vorläufige Subskription, wie beispielsweise die in Figur 1 dargestellte Subskription 18A, im Allgemeinen lediglich eine beschränkte Funktionalität bereitstellt, wird der Benutzer des mobilen Endgeräts 12 dazu veranlasst, zu einer vollständigen Subskription zu wechseln, das zusätzliche Dienste ermöglicht, wie die in Figur 1 dargestellte Subskription 18B.

Die Funktionsweise des Hintergrundsystems 50 in Verbindung mit den anderen Elementen des in Figur 1 dargestellten Kommunikationssystems 10 beim erstmaligen Versuch des Einbuchens des mobilen Endgeräts 12 in das PLMN 30 wird nun im Zusammenhang mit einer bevorzugten Ausführungsform der Erfindung unter weiterer Bezugnahme auf die Figur 2 beschrieben.

In einem ersten Schritt S1 von Figur 2 gibt das mobile Endgerät 12 mit dem Sicherheitselement 14 dem Mobilfunksystem 20 gegenüber zu erkennen, dass es vorzugsweise mittels der bereits auf dem Sicherheitselement 14 vorliegenden Subskription 18A über das PLMN 30 kommunizieren möchte. Vorzugsweise sendet das mobile Endgerät 12 hierzu eine entsprechende Anfrage vorzugsweise über das PLMN 30, die vorzugsweise an das Hintergrundsystem 50 weitergeleitet wird.

Daraufhin wird in einem Schritt S2 von Figur 2 die aktuelle Position des mobilen Endgeräts 12 bzw. des Sicherheitselements 14 bestimmt. Die Bestimmung der Position des mobilen Endgeräts 12 kann dabei vorzugsweise durch das PLMN 30 und/oder das Hintergrundsystems 50 erfolgen.

Gemäß einer bevorzugten Ausführungsform der Erfindung ist das mobile Endgerät 12 mit einem GPS-Modul oder mit einem Modul für ein anderes globales Navigationssatellitensystem ausgestattet, das dazu ausgestaltet ist, Daten zu liefern, anhand derer die aktuelle Position des mobilen Endgeräts 12 bestimmt werden kann. Alternativ oder zusätzlich kann die aktuelle Position des mobilen Endgeräts 12 anhand der Funkzelle des Mobilfunknetzes 30 bestimmt werden, in der sich das mobile Endgerät 12 befindet. Wie bereits vorstehend beschrieben, wird eine Funkzelle des PLMN 30 in der Regel durch ein BTS definiert, beispielsweise die in Figur 1 dargestellten beispielhaften BTS 32A-D.

Gemäß bevorzugter Ausführungsformen der Erfindung können die Daten, die es dem PLMN 30 und/oder dem Hintergrundsystem 50 erlauben, die aktuelle Position des mobilen Endgeräts 12 bzw. Sicherheitselements 14 zu bestimmen, bereits in der Anfrage von Schritt S1 von Figur 2 enthalten sein. Alternativ oder zusätzlich können diese Daten durch das PLMN 30 und/oder das Hintergrundsystem 50 nach der Anfrage in Schritt S1 von Figur 2 ermittelt oder vom mobilen Endgerät 12 bzw. Sicherheitselement 14 abgefragt werden.

Nachdem in Schritt S2 von Figur 2 die aktuelle Position des mobilen Endgeräts 12 bzw. Sicherheitselements 14 bestimmt worden ist, wird in einem Schritt S3 von Figur 2 überprüft, ob die in Schritt S2 bestimmte aktuelle Position des mobilen Endgeräts 12 bzw. Sicherheitselements 14 in einen Bereich von vordefinierten erlaubten Positionen fällt. Vorzugsweise ist ein entsprechender Datensatz, der den Bereich von erlaubten Positionen definiert, im Hintergrundsystem 50 für die Subskription 18A hinterlegt.

Ergibt die Prüfung in Schritt S3 von Figur 2, dass die in Schritt S2 von Figur 2 bestimmte aktuelle Position des mobilen Endgeräts 12 bzw. Sicherheitselements 14 in den für die Subskription 18A hinterlegten Bereich von erlaubten Positionen fällt, wird dem mobilen Endgerät 12 mit dem Sicherheitselement 14 die Kommunikation über das PLMN 30 mittels der Subskription 18A ermöglicht, d.h. die Subskription 18A wird aktiviert bzw. freigeschaltet. Vorzugsweise bestätigt hierzu das Hintergrundsystem 50 in Schritt S3 von Figur 2 dem PLMN 30 und dem Sicherheitselement 14, dass die in Schritt S2 von Figur 2 bestimmte aktuelle Position des mobilen Endgeräts 12 bzw. Sicherheitselements 14 in den Bereich von erlaubten Positionen fällt und die Subskription 18A somit aktiviert werden kann.

Vorzugsweise umfasst der Schritt des Aktivierens der Subskription in Schritt S3 von Figur 2 einen weiteren Schritt, der zur Folge hat, dass bei weiteren Versuchen des Sicherheitselements 14, sich mittels der bereits aktivierten Subskription 18A in das PLMN 30 einzubuchen, keine erneute Prüfung der Position des mobilen Endgeräts 12 bzw. Sicherheitselements 14 erfolgt. Wie der Fachmann erkennt, kann dieser Schritt auf viele Arten und Weisen bewerkstelligt werden. Beispielsweise könnten hierzu im Mobilfunksystem 20 hinterlegte Einstellungen derart geändert werden, dass bei weiteren Anmeldungs- bzw. Einbuchungsversuchen des Sicherheitselements 14 mit der aktivierten Subskription 18A beim PLMN 30 keine weitere Überprüfung der Position des mobilen Endgeräts 12 erfolgt. Insbesondere könnte im PLMN 30, vorzugsweise in dessen HLR bei den dort im Zusammenhang mit der Subskription 18A hinterlegten Daten ein Flag gepflegt werden, dessen Zustand anzeigt, ob die Subskription 18A bereits aktiviert worden ist oder nicht.

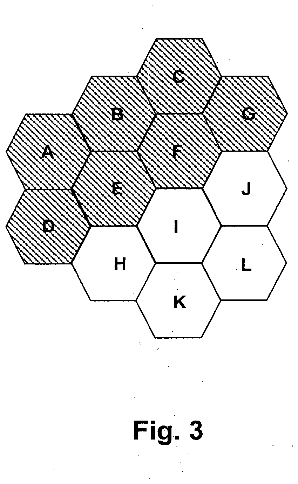

Nachdem dem Sicherheitselement 14 in Schritt S3 von Figur 2 vom Hintergrundsystem 50 bestätigt worden ist, dass die Subskription 18A aktiviert worden ist, kann sich das Sicherheitselement 14 in Schritt S4 von Figur 3 mit der aktivierten Subskription 18A auf herkömmliche Weise in das PLMN 30 einbuchen. Wie dies dem Fachmann bekannt ist, beinhaltet dieser Schritt in der Regel eine Authentisierung des Sicherheitselements 14 gegenüber dem PLMN 30, und zwar beispielsweise unter Verwendung einer IMSI und/oder eines Authentisierungsschlüssels Kᵢ, die Teil der aktivierten Subskription 18A sind.

Figur 3 zeigt eine beispielhafte schematische Darstellung eines Bereichs von für die Aktivierung der Subskription 18A erlaubten Positionen sowie eines Bereichs von für die Aktivierung der Subskription 18A nicht erlaubten Positionen des mobilen Endgeräts 12, wobei die zwei Bereiche jeweils durch Mobilfunkzellen des PLMN 30 definiert werden, die ein bestimmtes räumliches Gebiet, z.B. Teile eines Landes, einen Verwaltungsbezirk, ein Firmengelände, einen Verkaufsort oder dergleichen abdecken. Dabei wird beispielhaft ein erster Bereich dieses räumlichen Gebiets durch die Mobilfunkzellen A bis G (in Figur 3 schraffiert dargestellt) und ein zweiter Bereich durch die Mobilfunkzellen H bis L definiert, wobei beispielhaft der zweite Bereich den Bereich erlaubter Positionen im Sinne der Erfindung darstellt. In diesem Fall wäre ein Versuch, die Subskription 18A zu aktivieren, nur dann erfolgreich, wenn sich das mobile Endgerät 12 bzw. das Sicherheitselement 14 zum Zeitpunkt der entsprechenden Anfrage in dem durch die Mobilfunkzellen H bis L definierten Bereich von erlaubten Positionen befindet. Falls sich das mobile Endgerät 12 bzw. das Sicherheitselement 14 beim Versuch, die Subskription 18A zu aktivieren, hingegen aktuell in dem durch die Mobilfunkzellen A bis G definierten Bereich von nicht erlaubten Positionen befindet, erfolgt erfindungsgemäß keine Aktivierung der Subskription 18A.

Wie oben bereits beschrieben, kann es sich bei einer erfindungsgemäßen Variante des in Figur 2 dargestellten und vorstehend beschriebenen Verfahrens bei der Subskription 18A lediglich um eine vorläufige Subskription handeln, die dem Sicherheitselement 14 die Kommunikation mit dem Mobilfunksystem 20 und insbesondere dem Hintergrundsystem 50 des Mobilfunksystems 20 ermöglicht. Prinzipiell kann eine solche vorläufige Subskription im Wesentlichen lediglich aus einem Identifikationselement bestehen, mit dem sich das Sicherheitselement 14 eindeutig gegenüber dem PLMN 30 bzw. dem Hintergrundsystem 50 identifizieren kann.

Gemäß dieser erfindungsgemäßen Variante ist es vorstellbar, dass, nachdem das Sicherheitselement 14 mit dem Hintergrundsystem 50 vorzugsweise über das PLMN 30 Kontakt aufgenommen hat, das Hintergrundsystem 50 eine vollständige Subskription auf das Sicherheitselement 14 herunter lädt, sofern eine Überprüfung durch das Hintergrundsystem 50 ergibt, dass die aktuelle Position des mobilen Endgeräts 12 bzw. des Sicherheitselements in den vordefinierten Bereich von erlaubten Positionen fällt.

Wie der Fachmann erkennen wird, ist es bei dieser Variante denkbar, dass die vom Hintergrundsystem 50 herunter geladene vollständige Subskription die Kommunikation über ein anderes Mobilfunknetz als das PLMN 30 erlaubt. Bei dieser Variante stellt das PLMN 30 mittels der vorläufigen Subskription lediglich den Zugang zum Hintergrundsystem 50 bereit, um von dort die vollständige Subskription herunterzuladen, sofern erfindungsgemäß eine Überprüfung durch das Hintergrundsystem 50 ergibt, dass die aktuelle Position des mobilen Endgeräts 12 bzw. des Sicherheitselements 14 in den vordefinierten Bereich von erlaubten Positionen fällt. Die Kommunikation mittels der vollständigen Subskription erfolgt dann über ein anderes Mobilfunknetz, das Teil des Mobilfunksystems 20 ist und für das die vollständige Subskription insbesondere die notwendigen Subskriptionsberechtigungsdaten enthält.

Der Fachmann wird ferner erkennen, dass der vorstehend beschriebene Schritt S1 von Figur 2 zwar vorzugsweise, aber nicht notwendigerweise über das PLMN 30 erfolgt. Denn die Erfindung umfasst auch Ausführungsformen, bei denen das mobile Endgerät 12 bzw. das Sicherheitselement 14 über einen alternativen Kommunikationskanal mit dem Hintergrundsystem 50 kommuniziert, beispielsweise ein WLAN- bzw. WiFi-Netzwerk.

## Patentansprüche

1. Verfahren zum Aktivieren einer Subskription (18A, 18B) auf einem Sicherheitselement (14), das in einem mobilen Endgerät eingesetzt oder darin fest verbaut Teil dieses mobilen Endgeräts (12) ist, wobei das Verfahren die folgenden Schritte umfasst:
das Empfangen einer Anfrage des Sicherheitselements (14) durch ein Mobilfunksystem (20), über ein Mobilfunknetz (30) des Mobilfunksystems (20) zu kommunizieren;
das Ermitteln der Position des mobilen Endgeräts (12); und
**gekennzeichnet, durch** das Überprüfen durch das Mobilfunksystem (20), ob die ermittelte Position des mobilen Endgeräts (12) in einen vordefinierten Bereich von erlaubten Positionen fällt,
wobei die Subskription (18A, 18B) auf dem Sicherheitselement (14) aktiviert und dadurch dem Sicherheitselement die Kommunikation über das Mobilfunknetz (30) ermöglicht wird, falls die ermittelte Position des mobilen Endgeräts in den vordefinierten Bereich von erlaubten Positionen fällt.

2. Verfahren nach Anspruch 1, wobei vor dem Schritt des Empfangens der Anfrage sich das Sicherheitselement (14) mit der zu aktivierenden Subskription (18A, 18B) bei dem Mobilfunknetz (30) oder einem Hintergrundsystem (50) des Mobilfunksystems (20) anmeldet.

3. Verfahren nach Anspruch 1, wobei vor dem Schritt des Empfangens der Anfrage sich das Sicherheitselement (14) mit einer vorläufigen Subskription (18A) bei dem Mobilfunksystem (20) anmeldet und nach dem Schritt des Überprüfens die zu aktivierende Subskription (18B) vom Hintergrundsystem (50) auf das Sicherheitselement (14) heruntergeladen wird.

4. Verfahren nach Anspruch 1, wobei das Verfahren nach dem Schritt des Überprüfens den folgenden weiteren Schritt umfasst:
falls die ermittelte Position des mobilen Endgeräts (12) in den vordefinierten Bereich von erlaubten Positionen fällt, das Ändern von Einstellungen im Mobilfunksystem (20) derart, dass bei weiteren Anmeldungsvorgängen des Sicherheitselements (14) mit der freigeschalteten Subskription (18A, 18B) bei dem Mobilfunksystem (20) keine weitere Überprüfung der Position des mobilen Endgeräts (12) erfolgt.

5. Verfahren nach Anspruch 1, wobei die Subskription (18A, 18B) auf dem Sicherheitselement (14) nicht aktiviert wird, falls die ermittelte Position des mobilen Endgeräts (12) nicht in den vordefinierten Bereich von erlaubten Positionen fällt.

6. Verfahren nach Anspruch 1, wobei die Position des mobilen Endgeräts (12) mittels Daten von einem globalen Navigationssatellitensystem, vorzugsweise GPS-Daten, ermittelt wird.

7. Verfahren nach Anspruch 1, wobei die Position des mobilen Endgeräts (12) ermittelt wird, indem die Mobilfunkzelle bestimmt wird, in der sich das mobile Endgerät (12) befindet.

8. Verfahren nach Anspruch 1, wobei der Schritt des Überprüfens, ob die ermittelte Position des mobilen Endgeräts (12) in einen vordefinierten Bereich von erlaubten Positionen fällt, durch das Mobilfunknetz (30) oder das Hintergrundsystem (50) durchgeführt wird.

9. Verfahren nach Anspruch 8, wobei der Bereich von erlaubten Positionen durch Daten vordefiniert ist, die auf dem Hintergrundsystem (50) hinterlegt sind.

10. Mobiles Endgerät (12) mit einem Sicherheitselement (14), das darin eingesetzt oder fest verbaut Teil dieses mobilen Endgeräts (12) ist, wobei das Sicherheitselement (14) dazu ausgestaltet ist, gemäß einem Verfahren nach einem der vorhergehenden Ansprüche mit einer aktivierten Subskription versehen zu werden, um über das Mobilfunknetz (30) kommunizieren zu können.

11. Kommunikationssystem (10) mit einem Mobilfunknetzwerk (30), einem Hintergrundsystem (50) und einem mobilen Endgerät (12) nach Anspruch 10.

## Claims

1. A method for activating a subscription (18A, 18B) on a security element (14) which is inserted in a mobile end device or is part of this mobile end device (12), being permanently installed therein, wherein the method comprises the following steps:
receiving a request from the security element (14) by a mobile radio system (20) to communicate over a mobile radio network (30) of the mobile radio system (20);
establishing the position of the mobile end device (12); and
**characterized by** checking, by the mobile radio system (20), whether the established position of the mobile end device (12) falls within a predefined range of allowed positions,
wherein the subscription (18A, 18B) on the security element (14) is activated and thereby the security element enabled to communicate over the mobile radio network (30) if the established position of the mobile end device falls within the predefined range of allowed positions.

2. The method according to claim 1, wherein before the step of receiving the request the security element (14) logs in to the mobile radio network (30) or a background system (50) of the mobile radio system (20) with the subscription (18A, 18B) to be activated.

3. The method according to claim 1, wherein before the step of receiving the request the security element (14) logs in to the mobile radio system (20) with a provisional subscription (18A), and after the checking step the subscription (18B) to be activated is downloaded to the security element (14) from the background system (50).

4. The method according to claim 1, wherein the method comprises the following further step after the checking step:
if the established position of the mobile end device (12) falls within the predefined range of allowed positions, changing settings in the mobile radio system (20) such that no further check of the position of the mobile end device (12) is effected upon further log-ins of the security element (14) to the mobile radio system (20) with the released subscription (18A, 18B).

5. The method according to claim 1, wherein the subscription (18A, 18B) on the security element (14) is not activated if the established position of the mobile end device (12) does not fall within the predefined range of allowed positions.

6. The method according to claim 1, wherein the position of the mobile end device (12) is established by means of data from a global navigation satellite system, preferably GPS data.

7. The method according to claim 1, wherein the position of the mobile end device (12) is established by determining the mobile radio cell in which the mobile end device (12) is located.

8. The method according to claim 1, wherein the step of checking whether the established position of the mobile end device (12) falls within a predefined range of allowed positions is carried out by the mobile radio network (30) or the background system (50).

9. The method according to claim 8, wherein the range of allowed positions is predefined by data which are deposited on the background system (50).

10. A mobile end device (12) having a security element (14) which is inserted therein or is part of this mobile end device (12), being permanently installed therein, wherein the security element (14) is configured for being furnished with an activated subscription by a method according to any of the preceding claims in order to be able to communicate over the mobile radio network (30).

11. A communication system (10) having a mobile radio network (30), a background system (50) and a mobile end device (12) according to claim 10.

## Revendications

1. Procédé d'activation d'un abonnement (18A,18B) sur un élément de sécurité (14) qui est inséré dans un terminal mobile ou qui, y étant incorporé à demeure, fait partie de ce terminal mobile (12), le procédé comprenant les étapes suivantes :
la réception, par un système de radiocommunication mobile (20), d'une demande de l'élément de sécurité (14) de communiquer par l'intermédiaire d'un réseau de radiocommunication mobile (30) du système de radiocommunication mobile (20) ;
le repérage de la position du terminal mobile (12) ; et
**caractérisé par** la vérification, par le système de radiocommunication mobile (20), pour discerner si la position repérée du terminal mobile (12) est comprise dans une zone prédéfinie de positions autorisées,
cependant que l'abonnement (18A,18B) est activé sur l'élément de sécurité (14) et que, par cela, la communication par l'intermédiaire d'un réseau de radiocommunication mobile (30) est permise à l'élément de sécurité dans le cas où la position repérée du terminal mobile est comprise dans la zone prédéfinie de positions autorisées.

2. Procédé selon la revendication 1, cependant que, avant l'étape de la réception de la demande, l'élément de sécurité (14) s'enregistre auprès du réseau de radiocommunication mobile (30) ou auprès d'un système d'arrière-plan (50) du système de radiocommunication mobile (20) avec l'abonnement (18A,18B) à activer.

3. Procédé selon la revendication 1, cependant que, avant l'étape de la réception de la demande, l'élément de sécurité (14) s'enregistre auprès du système de radiocommunication mobile (20) avec un abonnement (18A) provisoire, et que, après l'étape de la vérification, l'abonnement (18B) à activer est enregistré par le système d'arrière-plan (50) sur l'élément de sécurité (14).

4. Procédé selon la revendication 1, cependant que le procédé, après l'étape de la vérification, comprend l'autre étape suivante :
dans le cas où la position repérée du terminal mobile (12) est comprise dans la zone prédéfinie de positions autorisées, la modification de configurations dans le système de radiocommunication mobile (20), de telle façon que, lors d'opérations subséquentes d'enregistrement de l'élément de sécurité (14) avec l'abonnement (18A, 18B) débloqué, au système de radiocommunication mobile (20) aucune vérification subséquente de la position du terminal mobile (12) n'a lieu.

5. Procédé selon la revendication 1, cependant que l'abonnement (18A, 18B) n'est pas activé sur l'élément de sécurité (14) dans le cas où la position repérée du terminal mobile (12) n'est pas comprise dans la zone prédéfinie de positions autorisées.

6. Procédé selon la revendication 1, cependant que la position du terminal mobile (12) est repérée au moyen de données d'un système mondial de navigation par satellite, de préférence au moyen de données GPS.

7. Procédé selon la revendication 1, cependant que la position du terminal mobile (12) est repérée en ce que la cellule de radiocommunication mobile dans laquelle se trouve le terminal mobile (12) est repérée.

8. Procédé selon la revendication 1, cependant que l'étape de la vérification pour discerner si la position repérée du terminal mobile (12) est comprise dans une zone prédéfinie de positions autorisées est exécutée par le réseau de radiocommunication mobile (30) ou par le système d'arrière-plan (50).

9. Procédé selon la revendication 8, cependant que la zone de positions autorisées est prédéfinie par des données qui sont stockées sur le système d'arrière-plan (50).

10. Terminal mobile (12) ayant un élément de sécurité (14) qui y est inséré ou qui, y étant incorporé à demeure, fait partie de ce terminal mobile (12), cependant que l'élément de sécurité (14) est conçu pour être, suivant un procédé selon une des revendications précédentes, pourvu d'un abonnement activé afin de pouvoir communiquer par l'intermédiaire du réseau de radiocommunication mobile (30).

11. Système de communication (10) ayant un réseau de radiocommunication mobile (30), un système d'arrière-plan (50) et un terminal mobile (12) selon la revendication 10.
